# EUROPEAN PATENT SPECIFICATION

(11) **EP 4 534 231 B1**
(45) Date of publication and mention of the grant of the patent: **17.09.2025**
(21) Application number: 23202120.4
(22) Date of filing: 06.10.2023
(51) Int. Cl.: B23K 26/242

(54) **LASER WELDING METHODS FOR STEEL PLATES**
LASERSCHWEISSVERFAHREN FÜR STAHLPLATTEN
PROCÉDÉS DE SOUDAGE AU LASER POUR TÔLES D'ACIER

(43) Date of publication of application: 09.04.2025
(73) Proprietor: Taiwan Mask Corporation, Hsinchu County 300 (TW)
(72) Inventor: LAI, Li-Wen, 300 Hsinchu County (TW); TSAI, Wei-Lun, 300 Hsinchu County (TW); HUANG, Yu-Ping, 300 Hsinchu County (TW); TAI, Chih-Hui, 300 Hsinchu County (TW)
(74) Representative: Viering, Jentschura & Partner mbB Patent- und Rechtsanwälte

(56) References cited:
- US-A1- 2007 119 829
- US-A1- 2014 124 489
- US-A1- 2019 084 086

## Description

### FIELD OF THE INVENTION

The present invention relates to a laser welding method for steel plates.

### BACKGROUND OF THE INVENTION

H-profile steels and T-profile steels are commonly used in the construction and manufacturing industries. In the case of T-profile steels, they are formed by spot welding two steel plates, and then welding them back and forth several times by electric welding, which is not only complicated and time-consuming, but also prone to deformation when the steel plates are subjected to high temperatures for a long period of time.

Using a laser to weld steel plates is developed accordingly. For example, Japan Patent Publication No. JP2005021912A discloses "a laser welding method for profile steels". As disclosed in this patent, metal plates are welded by a carbon dioxide gas laser or YAG (Yttrium Aluminum Garnet) laser to obtain H-profile steels or T-profile steels, without overheating and deformation of the metal plates.

However, the power of the carbon dioxide gas laser and YAG laser is low. When the metal plate is thick, such as 10 millimeters or more, it is difficult for the laser beam emitted from the carbon dioxide gas laser and YAG laser to penetrate through the metal plate to complete the welding. Conventional electric welding is still required for thicker metal plates.

Document US2014124489A1 discloses a hybrid welding method of laser welding and arc welding for a T-joint in which two 30mm thick members are joined together to form a T-joint.

### SUMMARY OF THE INVENTION

The present invention provides a laser welding method according to independent claim 1 and a laser welding method according to independent claim 4. The dependent claims show further preferred embodiments of the said methods. According to one aspect of the present invention, a laser welding method for steel plates is provided. The laser welding method comprises the following steps of connecting a first steel plate and a second steel plate at a joining angle, wherein the second steel plate has a thickness of between 8 and 20 mm, and a joint is formed between the first steel plate and the second steel plate; using a laser to weld the joint from one side of the second steel plate, defining a welding angle between the laser and the first steel plate, and joining the first steel plate and the second steel plate to form a profile steel. The laser has a laser diameter between 0.1 and 0.5 mm. The laser has a laser power between 10,000 and 25,000 watts. A weld bead is formed at the joint after being welded by the laser. The weld bead has a weld depth along the first steel plate and a weld width along the second steel plate. The ratio of the weld depth to the weld width is between 1 and 5. When the laser welds the joint, the laser has a travel speed of between 5 and 30 millimeters per second, and the welding angle is between 5 and 20 degrees. Further, the joining angle (θ1) formed between the first steel plate (1) and the second steel plate (2) is 90 degrees.

According to another aspect of the present invention, a laser welding method for steel plates according to claim 4 is provided.

Further, when the laser welds the joint, part of the first steel plate and/or the second steel plate are melted by the laser, thereby joining the first steel plate and the second steel plate.

Preferably, the laser is a fiber laser or a disc laser.

Preferably, when the lasers weld the j oint from the two sides of the second steel plate, the laser powers of the two lasers are different.

According to the above technical features, the following effects can be achieved:
1. By using a laser with a laser power between 10,000 and 25,000 watts, it is possible to effectively simplify the process, shorten welding time, and reduce the processing area for steel plates with a thickness of 8 to 40 millimeters.
2. Welding both sides of the second steel plate can prevent the second steel plate from being deformed.
3. When welding both sides of the second steel plate, the laser powers of the two lasers at both sides of the second steel plate are different, thus avoiding uneven or incomplete welding at the overlap of the weld beads on both sides and saving energy.
4. Through the selection of the welding angle, the surface configuration of the weld bead can be controlled without using a welding wire, corresponding to the thickness of the second steel plate.

### BRIEF DESCRIPTION OF THE DRAWINGS

FIG. 1 is a flow chart of a first embodiment of the present invention;
FIG. 2 is an exploded view of the first embodiment of the present invention, showing the first steel plate and the second steel plate;
FIG. 3 is a first schematic view of the first embodiment of the present invention, showing that the joint is to be welded;
FIG. 4 is a second schematic view of the first embodiment of the present invention, showing the joint after being welded;
FIG. 5 is a third schematic view of the first embodiment of the present invention, showing the profile steel after being welded;
FIG. 6 is a first schematic view of a second embodiment of the present invention, showing that the j oint is to be welded from both sides of the second steel plate;
FIG. 7 is a second schematic view of the second embodiment of the present invention, showing the profile steel after being welded;
FIG. 8 is a first photo of the second embodiment of the present invention, showing the weld bead after single-side welding;
FIG. 9 is a second photo of the second embodiment of the present invention, showing the weld bead after double-sided welding;
FIG. 10 is a first photo of the prior art, showing the weld bead after double-sided welding;
FIG. 11 is a second photo of the prior art, showing the profile steel after being stretched; and
FIG. 12 is a photo of the first embodiment of the present invention, showing the profile steel after being stretched.

### DETAILED DESCRIPTION OF THE PREFERRED EMBODIMENTS

Embodiments of the present invention will now be described, by way of example only, with reference to the accompanying drawings.

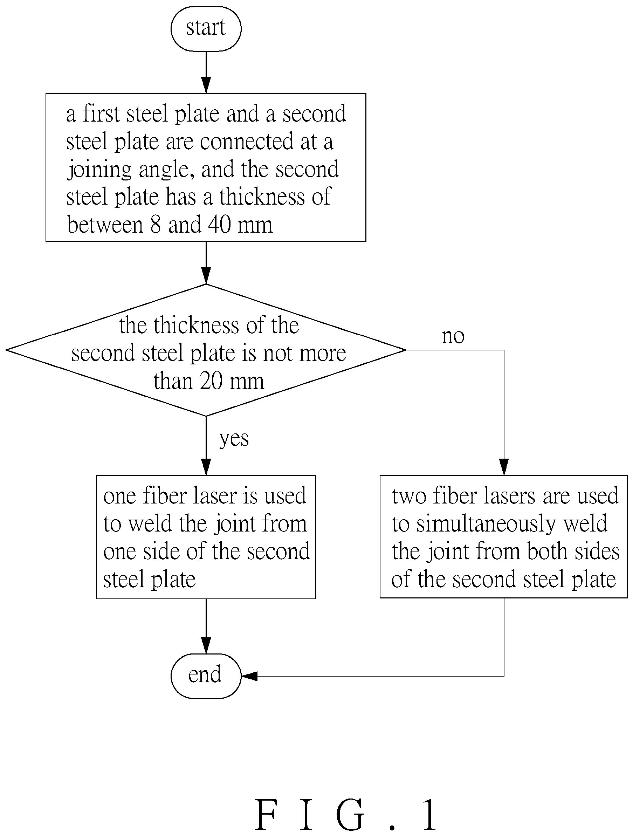

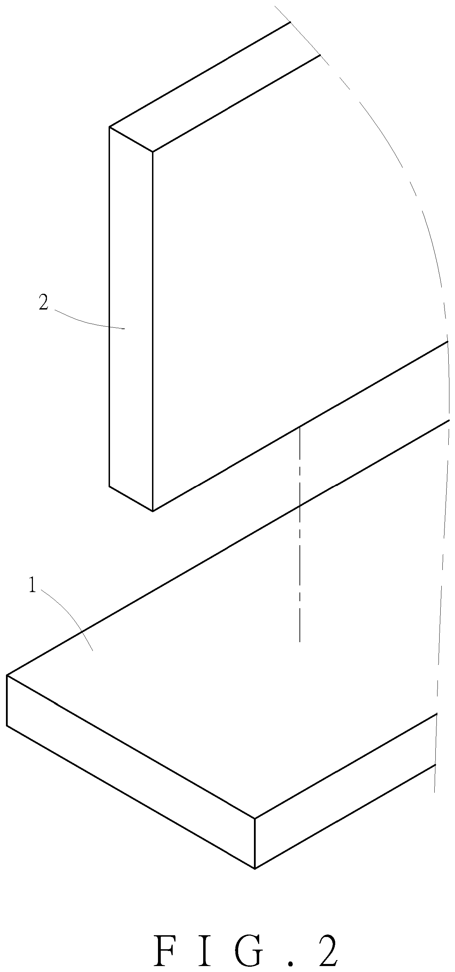

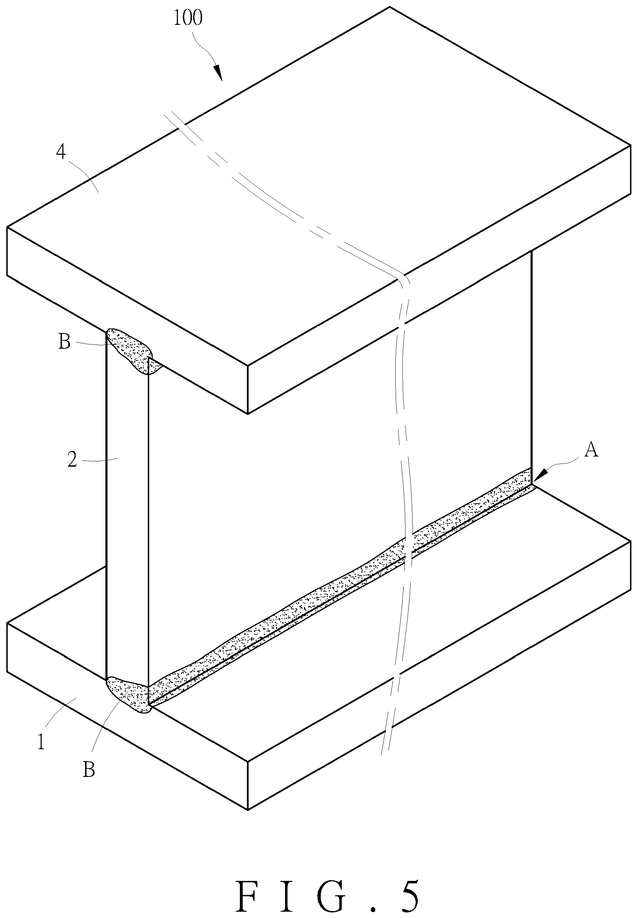

FIG. 1, FIG. 2, and FIG. 3 illustrate a first embodiment of the laser welding method for steel plates provided by the present invention for producing a profile steel (hereinafter referred to as the profile steel 100). The profile steel 100 is shown in FIG. 5.

The laser welding method comprises the following steps of:
A first steel plate 1 and a second steel plate 2 are connected at a joining angle θ1. A joint A is formed between the first steel plate 1 and the second steel plate 2. The joining angle θ1 is 90 degrees. For better welding, there is a weld bead spacing between the first steel plate 1 and the second steel plate 2 so that the first steel plate 1 and the second steel plate 2 are connected across the weld bead spacing.

In this embodiment, the thickness T1 of the second steel plate 2 is between 8 and 20 mm.

Next, the joint A is welded by using a laser from one side of the second steel plate 2, and a welding angle θ2 is defined between the laser and the first steel plate 1. The welding angle θ2 is between 5 and 20 degrees. In a preferred embodiment of the present invention, the laser is a fiber laser 3 as an example. In actual implementation, the laser may be a disc laser.

The fiber laser 3 has a laser diameter between 0.1 and 0.5 mm. The fiber laser 3 has a laser power between 10,000 and 25,000 watts. The fiber laser 3 has a travel speed of between 5 and 30 millimeters per second.

Referring to FIG. 1, FIG. 3 through FIG. 5, after being welded by the fiber laser 3, part of the first steel plate 1 and/or the second steel plate 2 will be melted at the joint A by the fiber laser 3, so that the first steel plate 1 and the second steel plate 2 are joined to each other. After the molten portion cools down, a weld bead B is formed at the joint A. The first steel plate 1 and the second steel plate 2 together form a T-profile steel.

Through the selection of the welding angle θ2, the surface configuration of the weld bead B can be controlled without using a welding wire, corresponding to the thickness T1 of the second steel plate. For example, if the second steel plate 2 is thick, the welding angle θ2 will be small, so as to ensure the welding effect.

As shown in FIG. 5, the profile steel 100 is further joined with a third steel plate 4 to form an H-profile steel. The connection between the third steel plate 4 and the second steel plate 2 is the same as the connection between the first steel plate 1 and the second steel plate 2 and will not be repeated herein.

The weld bead B has a weld depth C along the first steel plate 1 and a weld width D inclined along the second steel plate 2. The ratio of the weld depth C to the weld width D is between 1 and 5.

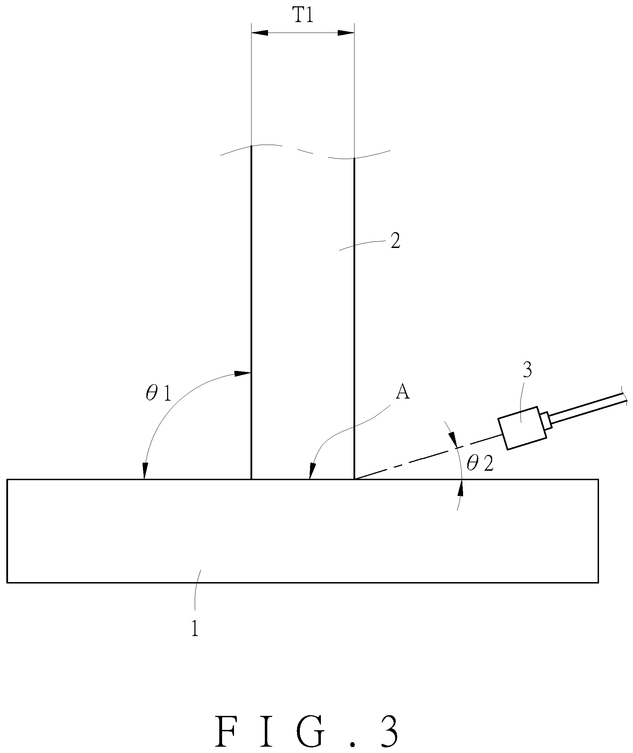

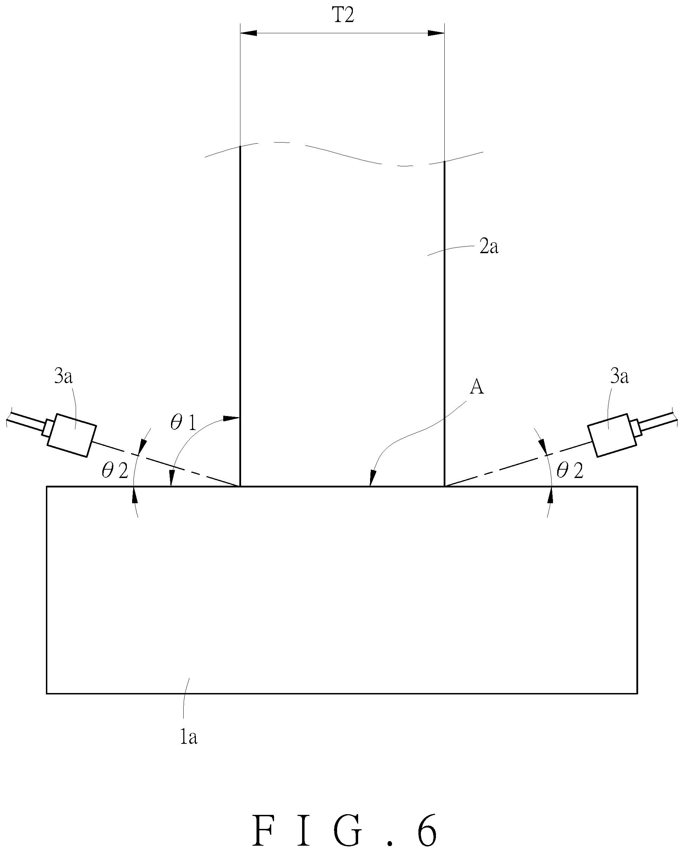

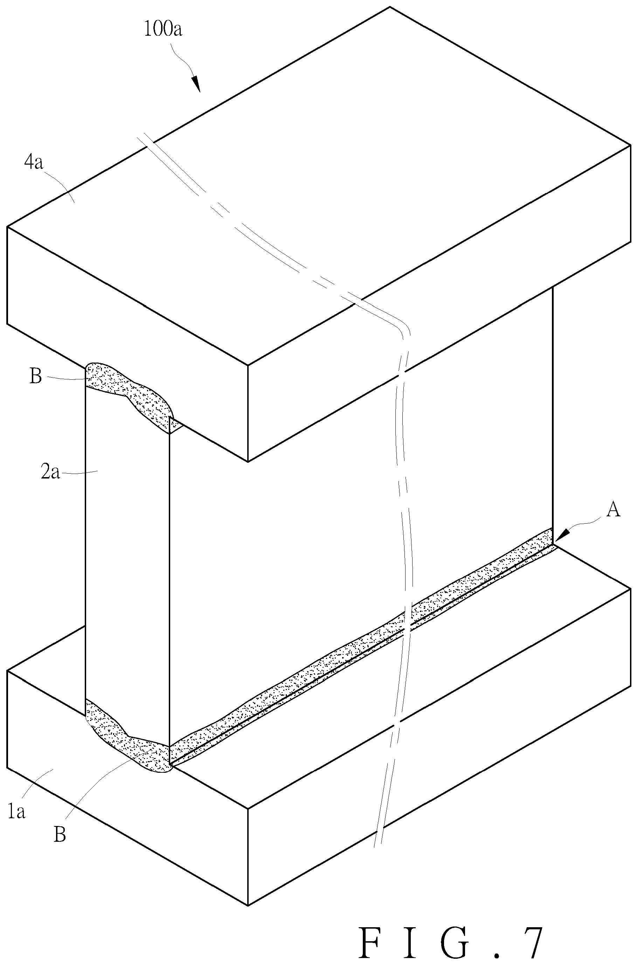

FIG. 6 and FIG. 7, in conjunction with FIG. 1, illustrate a second embodiment of the laser welding method for steel plates of the present invention. The second embodiment is substantially similar to the first embodiment with the exceptions described hereinafter. The first embodiment is applicable to the second steel plate 2 with a thickness T1 of between 8 and 20 mm, referring to FIG. 3. When the thickness T2 of the second steel plate 2a reaches 20 to 40 millimeters, the second embodiment of the laser welding method is more applicable. In actual implementation, the second steel plate 2 in FIG. 3 may be weld using the second embodiment of the laser welding method.

Similar to the first embodiment, the first steel plate 1a and the second steel plate 2a are connected at the joining angle θ1. The joint A is formed between the first steel plate 1a and the second steel plate 2a.

Then, two fiber lasers 3a are used to simultaneously weld the joint A from both sides of the second steel plate 2a, and the welding angle θ2 is defined between either laser 3a and the first steel plate 1a, so that the first steel plate 1a and the second steel plate 2a are joined to form a T-profile steel.

Preferably, the welding on both sides of the second steel plate 2a is performed simultaneously, and the laser powers of the two fiber lasers 3a are different. The drawings of the present invention are only for illustration. As shown in FIG. 7, the third steel plate 4a is further joined to the profile steel 100a to form an H-profile steel.

Welding both sides of the second steel plate 2a not only ensures that the first steel plate 1a is firmly joined to the second steel plate 2a, but also prevents the second steel plate 2a from being deformed due to the temperature difference between both sides of the second steel plate 2a in the case of welding only one side of the second steel plate.

The laser powers of the two fiber lasers 3a are different to avoid uneven or incomplete welding at the overlap of the weld beads B on both sides. When the thickness T2 of the second steel plate 2a is small, energy can be saved by using a laser with a lower power at one side of the second steel plate 2a.

The parameters of the fiber lasers 3a and the welding process may be in the same range as the first embodiment, and will not be repeated here.

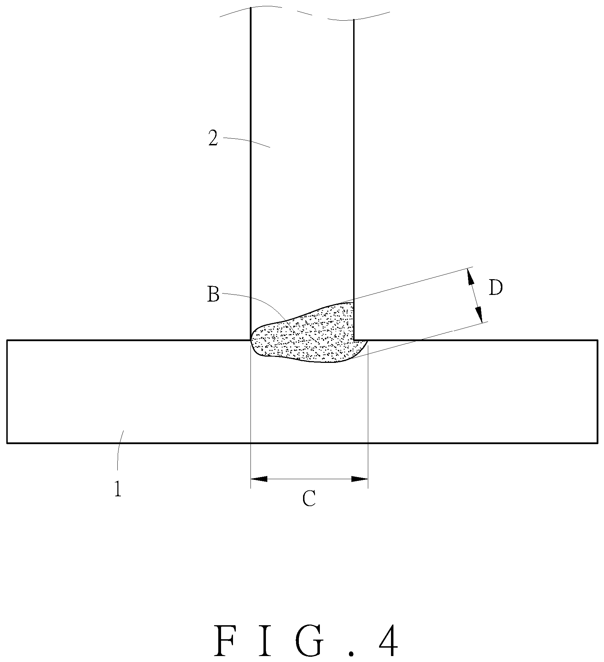

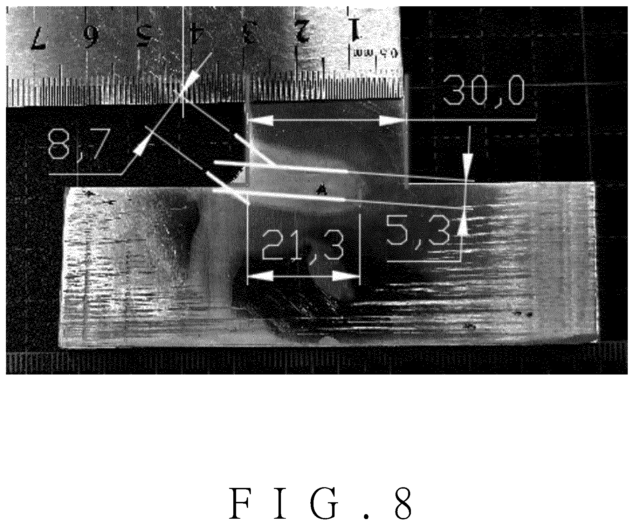

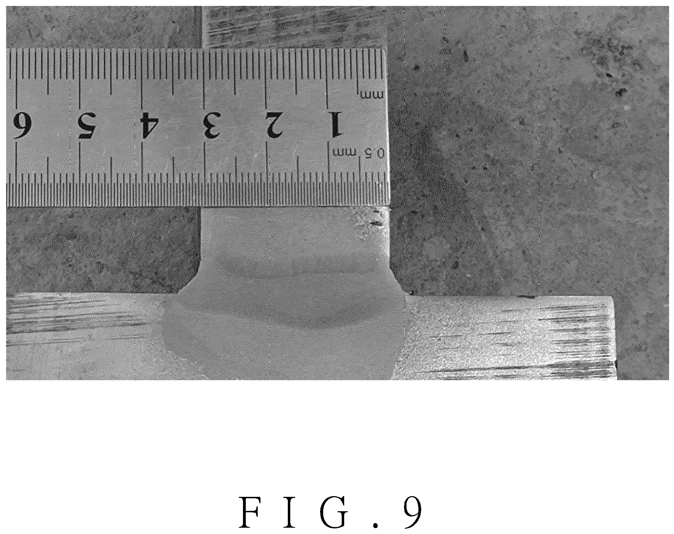

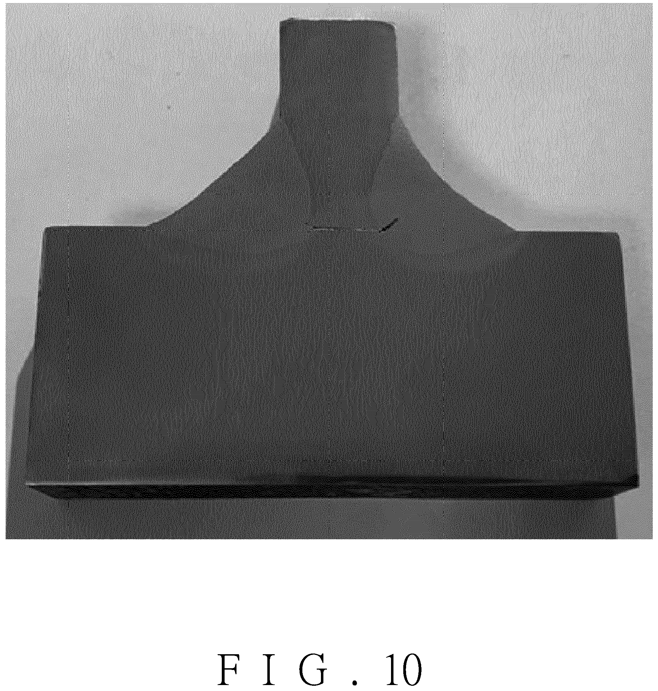

Please refer to FIG. 8 through FIG. 10, in conjunction with FIG. 4. FIG. 8 shows that only one side of a T-profile steel is welded. FIG. 9 shows that both sides of a T-profile steel are welded using the laser welding method of the second embodiment of the present invention. FIG. 10 shows a T-profile steel welded by the conventional electric welding technology.

From the comparison of the photos, it is clear that the conventional electric welding technology has defects such as pores and poor melting. The present invention has a more uniform welding effect, which can simplify the process effectively, shorten welding time, and reduce the processing area.

From the marks in FIG. 8, it can be confirmed that the ratio of the weld depth C to the weld width D is indeed between 1 and 5, and the weld depth C indeed reaches about 20 mm.

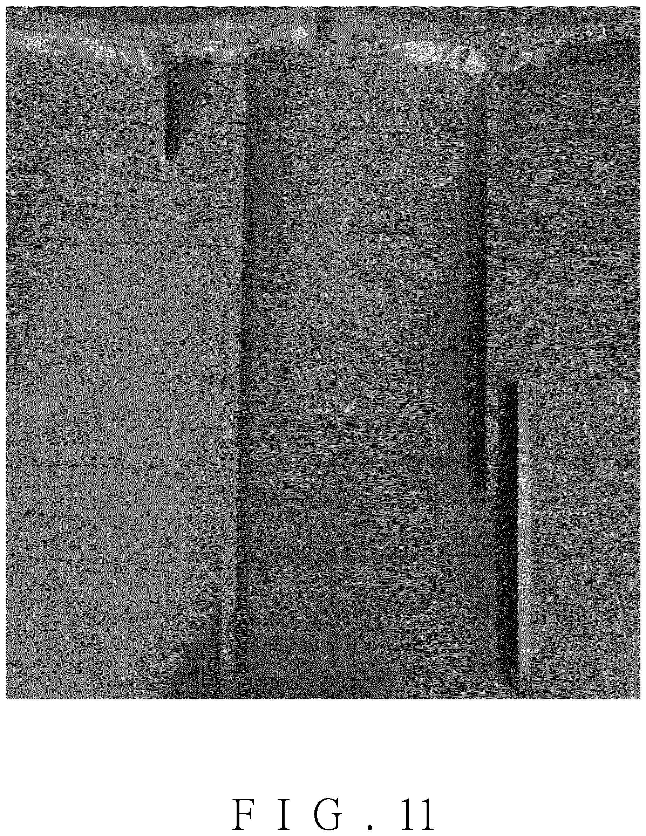

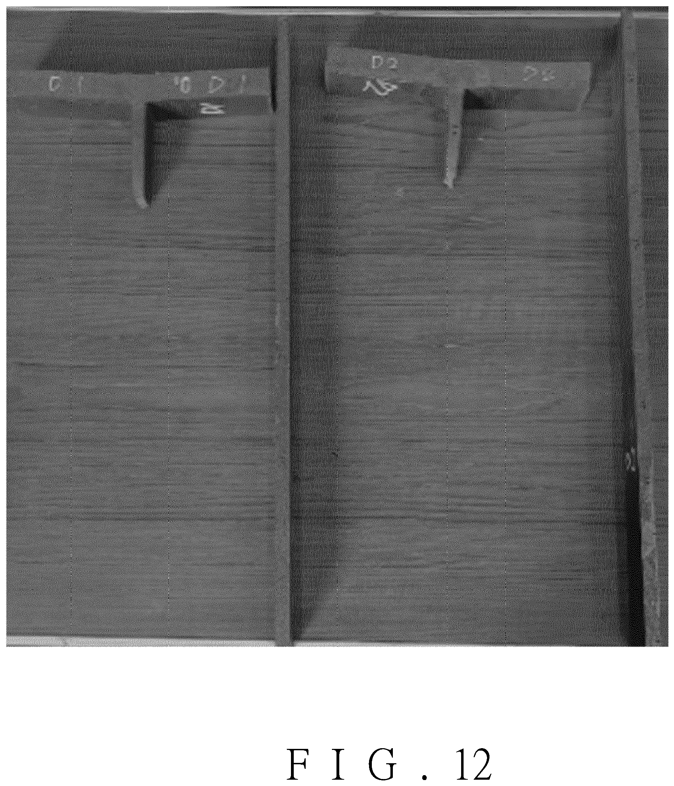

Referring to FIG. 11 and FIG. 12, two profile steel specimens (FIG. 11) welded by submerged arc welding (SAW) and two profile steel specimens (FIG. 12) welded by the laser welding method of the first embodiment of the present invention were tested by the tensile test method of AWS D1.1/D1.1M(2020) of Taiwan Inspection Technology Co. The test results are shown in Table 1, FIG. 11 and FIG. 12 below.

**Table 1. Tensile test results:**

| Specimen No. | welding method | tensile load (kg) | thickness (mm) of first steel plate |
|---|---|---|---|
| 1 | submerged arc welding | 29672 | 12 |
| 2 | | 27741 | 12 |
| 3 | laser welding method of the present invention | 42331 | 16 |
| 4 | | 44246 | 16 |

Please refer to FIG. 3 and FIG. 4, in conjunction with FIG. 11 and FIG. 12. In the above test, the profile steels were all broken from the middle of the second steel plate 2, not from the joint B. It can be known that after using the laser welding method of the present invention, the weld bead B does have sufficient strength as that of the conventional submerged arc welding.

Taking a combined H-profile steel (BH) as an example, in terms of production speed, the conventional technology takes more than 4 hours for each combined profile steel, but the present invention can complete the welding of one combined profile steel in 20 minutes.

In terms of manpower, for every 3,000 tons of combined profile steel, the conventional welding technology requires 6 people to perform the welding operation, while the present invention only requires one person to perform the welding operation.

In addition to increasing production speed and reducing labor costs, compared with the conventional welding technology, the present invention can save 80% of welding materials and reduce carbon emissions by 70%.

Although particular embodiments of the present invention have been described in detail for purposes of illustration, various modifications and enhancements may be made without departing from the scope of the present invention. Accordingly, the present invention is not to be limited except as by the appended claims.

## Claims

1. A laser welding method for steel plates, comprising the following steps of:
connecting a first steel plate (1) and a second steel plate (2) at a joining angle (Θ1) of 90 degrees, wherein the second steel plate (2) has a thickness (T1) of between 8 and 20 mm, and a joint (A) is formed between the first steel plate (1) and the second steel plate (2);
using a laser to weld the joint (A) from one side of the second steel plate (2), defining a welding angle (θ2) between the laser and the first steel plate (1), joining the first steel plate (1) and the second steel plate (2) to form a profile steel;
wherein the laser has a laser diameter between 0.1 and 0.5 mm, the laser has a laser power between 10,000 and 25,000 watts, a weld bead (B) is formed at the joint (A) after being welded by the laser, the weld bead (B) has a weld depth (C) along the first steel plate (1) and a weld width (D) along the second steel plate (2), and the ratio of the weld depth (C) to the weld width (D) is between 1 and 5;
wherein, when the laser welds the joint (A), the laser has a travel speed of between 5 and 30 millimeters per second, and the welding angle (θ2) is between 5 and 20 degrees.

2. The laser welding method as claimed in claim 1, wherein when the laser welds the joint (A), part of the first steel plate (1) and/or the second steel plate (2) are melted by the laser, thereby joining the first steel plate (1) and the second steel plate (2).

3. The laser welding method as claimed in claim 1, wherein the laser is a fiber laser (3) or a disc laser.

4. A laser welding method for steel plates, comprising the following steps of:
connecting a first steel plate (1a) and a second steel plate (2a) at a joining angle (Θ1) of 90 degrees, wherein the second steel plate (2a) has a thickness (T2) of between 8 and 40 mm, and a joint (A) is formed between the first steel plate (1a) and the second steel plate (2a);
using two lasers to weld the joint (A);
wherein one of the lasers welds the joint (A) from one side of the second steel plate (2), and a welding angle (θ2) is defined between the one of the lasers and the first steel plate (1);
wherein the other one of the lasers welds the joint (A) from another side of the second steel plate (2), and the welding angle (θ2) is defined between the other one of the lasers and the first steel plate (1), so that the first steel plate (1) and the second steel plate (2) are joined to form a profile steel;
wherein the lasers each have a laser diameter between 0.1 and 0.5 mm, the lasers each have a laser power between 10,000 and 25,000 watts, a weld bead (B) is formed at the joint (A) after being welded by the lasers, the weld bead (B) has a weld depth (C) along the first steel plate (1) and a weld width (D) along the second steel plate (2), and the ratio of the weld depth (C) to the weld width (D) is between 1 and 5;
wherein, when the laser welds the joint (A), the laser has a travel speed of between 5 and 30 millimeters per second, and the welding angle (θ2) is between 5 and 20 degrees.

5. The laser welding method as claimed in claim 4, wherein when the lasers weld the joint (A) from the two sides of the second steel plate (2), the laser powers of the two lasers are different.

## Patentansprüche

1. Laserschweißverfahren für Stahlplatten, das die folgenden Schritte umfasst:
Zusammenfügen einer ersten Stahlplatte (1) und einer zweiten Stahlplatte (2) in einem Fügewinkel (θ1) von 90 Grad, wobei die zweite Stahlplatte (2) eine Dicke (T1) zwischen 8 und 20 mm aufweist und zwischen der ersten Stahlplatte (1) und der zweiten Stahlplatte (2 ) eine Fügestelle (A) gebildet wird; und
Schweißen der Fügestelle (A) von einer Seite der zweiten Stahlplatte (2) mittels eines Lasers, Definieren eines Schweißwinkels (θ2) zwischen dem Laser und der ersten Stahlplatte (1), und Verbinden der ersten Stahlplatte (1) und der zweiten Stahlplatte (2) zu einem Profilstahl;
wobei der Laser einen Laserdurchmesser zwischen 0,1 und 0,5 mm hat, wobei der Laser eine Laserleistung zwischen 10.000 und 25.000 Watt hat, wobei an der Fügestelle (A) nach dem Schweißen durch den Laser eine Schweißnaht (B) gebildet wird, wobei die Schweißnaht (B) entlang der ersten Stahlplatte (1) eine Schweißtiefe (C) und entlang der zweiten Stahlplatte (2) eine Schweißbreite (D) aufweist, wobei das Verhältnis der Schweißtiefe (C) zur Schweißbreite (D) zwischen 1 und 5 liegt; und
wobei der Laser beim Schweißen der Fügestelle (A) eine Bewegungsgeschwindigkeit zwischen 5 und 30 Millimetern pro Sekunde aufweist und der Schweißwinkel (θ2) zwischen 5 und 20 Grad liegt.

2. Laserschweißverfahren nach Anspruch 1, **dadurch gekennzeichnet, dass** beim Schweißen der Fügestelle (A) durch den Laser ein Teil der ersten Stahlplatte (1) und/oder der zweiten Stahlplatte (2) durch den Laser geschmolzen wird, wodurch die erste Stahlplatte (1) und die zweite Stahlplatte (2) verbunden werden.

3. Laserschweißverfahren nach Anspruch 1, **dadurch gekennzeichnet, dass** der Laser ein Faserlaser (3) oder ein Scheibenlaser ist.

4. Laserschweißverfahren für Stahlplatten, das die folgenden Schritte umfasst:
Zusammenfügen einer ersten Stahlplatte (1a) und einer zweiten Stahlplatte (2a) in einem Fügewinkel (θ1) von 90 Grad , wobei die zweite Stahlplatte (2a) eine Dicke (T2) zwischen 8 und 40 mm aufweist und eine Fügestelle (A) zwischen der ersten Stahlplatte (1a) und der zweiten Stahlplatte (2a ) gebildet wird;
Verwenden von zwei Lasern zum Schweißen der Fügestelle (A);
wobei einer der Laser die Fügestelle (A) von einer Seite der zweiten Stahlplatte (2) aus schweißt und zwischen einem der Laser und der ersten Stahlplatte (1) ein Schweißwinkel (θ2) definiert ist;
wobei der andere der Laser die Fügestelle (A) von der anderen Seite der zweiten Stahlplatte (2) aus schweißt und der Schweißwinkel (θ2) zwischen dem anderen der Laser und der ersten Stahlplatte (1) definiert ist, sodass die erste Stahlplatte (1) und die zweite Stahlplatte (2) zu einem Profilstahl verbunden werden;
wobei die Laser jeweils einen Laserdurchmesser zwischen 0,1 und 0,5 mm haben, wobei die Laser jeweils eine Laserleistung zwischen 10.000 und 25.000 Watt haben, wobei an der Fügestelle (A) nach dem Schweißen durch die Laser eine Schweißnaht (B) gebildet wird, wobei die Schweißnaht (B) entlang der ersten Stahlplatte (1) eine Schweißtiefe (C) und entlang der zweiten Stahlplatte (2) eine Schweißbreite (D) aufweist, wobei das Verhältnis der Schweißtiefe (C) zur Schweißbreite (D) zwischen 1 und 5 liegt; und
wobei der Laser beim Schweißen der Fügestelle (A) eine Bewegungsgeschwindigkeit zwischen 5 und 30 Millimetern pro Sekunde aufweist und der Schweißwinkel (θ2) zwischen 5 und 20 Grad liegt.

5. Laserschweißverfahren nach Anspruch 4, **dadurch gekennzeichnet, dass** beim Schweißen der Fügestelle (A) von den beiden Seiten der zweiten Stahlplatte (2) durch die Laser die Laserleistungen der beiden Laser unterschiedlich sind.

## Revendications

1. Procédé de soudage au laser pour plaques en acier, **caractérisé par le fait qu'**il comprend les étapes suivantes :
la connexion d'une première plaque en acier (1) et d'une seconde plaque en acier (2) à un angle de jonction (θ1) de 90 degrés, la seconde plaque en acier (2) présente une épaisseur (T1) comprise entre 8 et 20 mm, et un joint (A) est formé entre la première plaque en acier (1) et la seconde plaque en acier (2) ;
l'utilisation d'un laser pour souder le joint (A) depuis un côté de la seconde plaque en acier (2), définissant un angle de soudage (θ2) entre le laser et la première plaque en acier (1), joignant la première plaque en acier (1) et la seconde plaque en acier (2) pour former un acier profilé ;
le laser présente un diamètre de laser compris entre 0,1 et 0,5 mm, le laser a une puissance laser comprise entre 10.000 et 25.000 watts, un cordon de soudure (B) est formé au joint (A) après avoir été soudé par le laser, le cordon de soudure (B) a une profondeur de soudure (C) le long de la première plaque d'acier (1) et une largeur de soudure (D) le long de la deuxième plaque d'acier (2), et le rapport entre la profondeur de soudure (C) et la largeur de soudure (D) est compris entre 1 et 5 ;
lorsque le laser soude le joint (A), le laser a une vitesse de déplacement comprise entre 5 et 30 millimètres par seconde, et l'angle de soudage (θ2) est compris entre 5 et 20 degrés.

2. Procédé de soudage au laser selon la revendication 1, **caractérisé par le fait que** lorsque le laser soude le joint (A), une partie de la première plaque en acier (1) et/ou de la seconde plaque en acier (2) sont fondues par le laser, joignant ainsi la première plaque en acier (1) et la seconde plaque en acier (2).

3. Procédé de soudage au laser selon la revendication 1, **caractérisé par le fait que** le laser est un laser à fibre (3) ou un laser à disque.

4. Procédé de soudage au laser pour plaques en acier, **caractérisé par le fait qu'**il comprend les étapes suivantes :
la connexion d'une première plaque en acier (1a) et d'une seconde plaque en acier (2a) à un angle de jonction (θ1) de 90 degrés, la seconde plaque en acier (2a) présente une épaisseur (T2) comprise entre 8 et 40 mm, et un joint (A) est formé entre la première plaque en acier (1a) et la seconde plaque en acier (2a) ;
l'utilisation de deux lasers pour souder le joint (A) ;
l'un des lasers soude le joint (A) depuis un côté de la seconde plaque en acier (2), et un angle de soudage (θ2) est défini entre l'un des lasers et la première plaque en acier (1) ;
l'autre des lasers soude le joint (A) depuis un autre côté de la seconde plaque en acier (2), et l'angle de soudage (θ2) est défini entre l'autre des lasers et la première plaque en acier (1), de sorte que la première plaque en acier (1) et la seconde plaque en acier (2) sont jointes pour former un acier profilé ;
les lasers présentent chacun un diamètre de laser compris entre 0,1 et 0,5 mm, les lasers ont chacun une puissance laser comprise entre 10.000 et 25.000 watts, un cordon de soudure (B) est formé au joint (A) après avoir été soudé par les lasers, le cordon de soudure (B) a une profondeur de soudure (C) le long de la première plaque d'acier (1) et une largeur de soudure (D) le long de la deuxième plaque d'acier (2), et le rapport entre la profondeur de soudure (C) et la largeur de soudure (D) est compris entre 1 et 5 ;
lorsque le laser soude le joint (A), le laser a une vitesse de déplacement comprise entre 5 et 30 millimètres par seconde, et l'angle de soudage (θ2) est compris entre 5 et 20 degrés.

5. Procédé de soudage au laser selon la revendication 4, **caractérisé par le fait que** lorsque les lasers soudent le joint (A) depuis les deux côtés de la seconde plaque en acier (2), les puissances laser des deux lasers sont différentes.
